# FASCICULE DE BREVET EUROPEEN

(11) **EP 2 339 948 B1**
(45) Date de publication et mention de la délivrance du brevet: **04.07.2012**
(21) Numéro de dépôt: 09784325.4
(22) Date de dépôt: 30.07.2009
(51) Int. Cl.: A47J 43/07, A21B 7/00

(54) **DISPOSITIF DE PREPARATION ET DE CUISSON D'ALIMENTS ET APPAREIL ELECTROMENAGER ASSOCIE**
VORRICHTUNG ZUM ZUBEREITEN UND GAREN VON NAHRUNGSMITTELN UND ZUGEORDNETES ELEKTRISCHES HAUSHALTSGERÄT
DEVICE FOR PREPARING AND COOKING FOOD AND ASSOCIATED HOUSEHOLD ELECTRICAL APPLIANCE

(30) Priorité: 01.08.2008 FR 0804398
(43) Date de publication de la demande: 06.07.2011
(73) Titulaire: SEB S.A., 69130 Ecully (FR)
(72) Inventeur: VALANCE Nicolas, F-21000 Dijon (FR)
(74) Mandataire: Cémeli, Eric Philippe Laurent
(86) Numéro de dépôt international: PCT/FR2009/000958
(87) Numéro de publication internationale: WO 2010/012909

(56) Documents cités:
- EP-A- 1 314 384
- EP-A- 1 486 153
- EP-A- 1 908 380
- DE-U1- 29 911 750
- JP-A- 3 007 120
- US-A- 5 463 937
- US-A1- 2003 140 796
- US-B1- 6 321 641

## Description

L'invention concerne le domaine des appareils de préparation et de cuisson d'aliments pour appareil électroménager et notamment la cuve de préparation et de cuisson de ces appareils associée à la pale de mélange et de pétrissage.

De tels appareils, dont la machine à pain est un exemple récent très connu, sont capables de mélanger automatiquement, voire séquentiellement, les différents ingrédients, puis de réaliser la cuisson par apport d'énergie par rayonnement et/ou par conduction et/ou convection.

Dans le cas de la machine à pain, l'appareil permet de pétrir, lever et cuire différentes sortes de pâtes de manière à réaliser une grande variété de pains, avec une cuisson définie selon les goûts et l'addition de composés très diversifiés.

La machine à pain comporte généralement de multiples fonctionnalités comme la possibilité de programmer la fabrication du pain et d'en différer la cuisson, le maintien au chaud après la cuisson, etc....

La plupart de ces appareils présentent une cuve rectangulaire possédant un fond sensiblement plat sur lequel sont disposées des pales de malaxage amovibles de l'appareil, ainsi que plusieurs parois verticales.

Ces parois verticales sont utilisées pour le malaxage des ingrédients et de la pâte résultante, ainsi que pour le maintien de la pâte dans le contenant lors des différentes étapes d'élaboration du pain.

Les différents pains élaborés dans de telles cuves se présentent ainsi selon une forme parallélépipédique moulée par les parois verticales, forme quelquefois difficile à démouler, en partie à cause de la hauteur conséquente de la cuve, mais également par la présence de pales de malaxage dans le volume du pain.

Un tel exemple de machine à pain peut être donné par le document JP 2008000255. Un autre example est donné par le document US 2003/0140796.

Par ailleurs, de telles formes de pain génèrent une croûte importante par la forme imposée par le contenant, forme qui oblige la pâte à lever sous la contrainte des parois verticales, imposant une croissance qui n'est pas naturelle et qui n'est pas adaptée à tous les types de pain.

La présente invention vise à remédier aux inconvénients de l'art antérieur en proposant une architecture originale du contenant et de la pale de mélange et de pétrissage permettant, lors de la fermentation, une croissance naturelle de la pâte, tout en favorisant le démoulage du pain une fois cuit.

Plus particulièrement, la présente invention présente une pale de malaxage adaptée au contenant par le mode de malaxage de la pâte ainsi obtenu.

La présente invention est atteinte à l'aide d'un dispositif de préparation et de cuisson pour un appareil électroménager, comprenant une cuve comportant une paroi de fond sensiblement horizontale, ainsi qu'une ou plusieurs parois sensiblement verticales reliées à la périphérie de la paroi de fond par une paroi de liaison, ledit dispositif comportant au moins une pale de mélange et de pétrissage d'ingrédients disposée dans le volume de la cuve, caractérisé en ce que la cuve est circulaire et cette pale, dans sa position de mélange et de pétrissage, ménage un espace sous-jacent avec la paroi de fond de la cuve.

Ainsi, la présente invention se propose de présenter une cuve de préparation et de cuisson équipée d'une pale de mélange et de pétrissage disposée, non pas à proximité immédiate de la paroi de fond, tel qu'il est fréquemment rencontré dans des appareils de type machine à pain, mais au contraire en ménageant, sciemment, un espace conséquent entre la pale et la paroi de fond de la cuve.

En effet, l'un des buts de la présente invention, dans l'application de fabrication du pain, est de « libérer » la croissance et la cuisson de pâte à pain des parois verticales du contenant dans lequel elle est élaborée.

Dans cette optique, il paraît alors intéressant de permettre un mélange et surtout un pétrissage de la pâte qui soient essentiellement réalisés verticalement, par passage des ingrédients ou de la pâte sous la pale, plutôt que horizontalement par renvoi des ingrédients ou de la pâte par les parois verticales de la cuve. Cette disposition ne permet toutefois pas de supprimer lesdites parois verticales qui sont nécessaires pour définir un volume de contenant lors de la phase initiale d'introduction et de mélange des ingrédients.

Un tel espace sous-jacent à la pale permet notamment, lors de la réalisation de pâte, un effet de laminage de cette pâte entre la pale et la paroi de fond de la cuve.

Pour réaliser au mieux un tel laminage, la distance entre la pale, dans sa position de pétrissage, et la paroi de fond de la cuve, est comprise entre 5 et 15 mm.

Selon l'invention, la pale est en effet montée en rotation autour d'un axe vertical de la cuve afin de réaliser le brassage des différents ingrédients, et, dans le cadre de la réalisation de pain, le pétrissage de la pâte à pain.

De préférence, la pale présente une partie sensiblement plane associée, à l'une de ses extrémités, à un moyen de liaison à la cuve, l'extrémité opposée étant libre, la partie sensiblement plane, dans la position de mélange et de pétrissage de la pale, présentant un angle par rapport à la paroi de fond de la cuve inférieur à 90°.

Une telle inclinaison de la pale par rapport à la verticale permet, lors de la rotation de ladite pale, de rabattre les ingrédients ou la pâte vers le fond de la cuve, favorisant le passage des ingrédients et le laminage de la pâte entre la pale et la paroi de fond de la cuve.

Avantageusement, l'angle de la partie sensiblement plane de la pale en position de mélange et de pétrissage, par rapport à la paroi de fond de la cuve, est compris entre 40° et 85°.

Selon un mode préféré de mise en oeuvre de l'invention, la pale comporte un axe horizontal de rotation afin de se positionner dans la cuve selon plusieurs orientations. Il est en particulier prévu que la pale occupe une position où la partie sensiblement plane soit disposée parallèlement au fond de la cuve, à une très faible distance de ce dernier, après rotation de la pale autour de l'axe horizontal, cette position étant favorable à un démoulage optimum du pain, par la faible épaisseur de pain cuit entre la pale et la paroi de fond.

Selon cette configuration, l'extrémité libre de la pale possède un volet supérieur présentant un angle avec la partie plane, cet angle étant orienté positivement.

Ainsi, lorsque la pale est rabattue contre la paroi de fond de la cuve, le volet supérieur présente un angle non nul par rapport à la paroi de fond, permettant à la pale d'offrir une résistance aux ingrédients suffisante pour permettre, dans certaines conditions de rotation de la pale, le redressement de cette dernière en position de mélange et de pétrissage.

Avantageusement, selon cette architecture de cuve et de pale, cette dernière s'étend radialement légèrement au-delà de la paroi de fond de la cuve, afin de ramener vers le centre de la cuve, les ingrédients ou la pâte qui s'étend au niveau de la paroi de liaison.

Selon un aspect complémentaire de l'invention, la paroi de liaison de la cuve présente au moins un rayon de courbure supérieur à 30 mm.

La présence de larges rayons de courbure dans la paroi de liaison permet d'éloigner en quelque sorte les parois verticales de la paroi de fond, ce qui permet à la pâte, avant la phase de pousse, d'être située essentiellement au niveau des parois de fond et de liaison. La pâte aura ainsi tendance à lever naturellement, sans suivre les parois verticales, en présentant une forme en dôme, qui minimise la présence de bords verticaux dans le pain une fois cuit.

De préférence, tous les rayons de courbure de la paroi de liaison sont supérieurs à 30 mm, afin d'éviter des zones de coincement potentiel du pain.

Par ailleurs, le démoulage d'un tel pain s'en trouve facilité, puisqu'une majeure partie du contour du pain n'adhère pas aux parois de la cuve.

Il peut alors être envisagé, dans une version spécifique de l'invention, de rendre la pale inamovible de la cuve, ce qui évite tout risque de perte ou d'oubli lors du fonctionnement de l'appareil.

Par ailleurs, l'effet d'éloignement des parois verticales de la paroi de fond est accentué lorsque la paroi de liaison est sensiblement tangente à la paroi de fond ainsi qu'à la paroi (qu'aux) paroi(s)) verticale(s).

Par l'expression « tangente à », il faut comprendre que la paroi de liaison se présente sous la forme d'un arc de cercle équivalent sensiblement à un quart de la périphérie d'un cercle, de telle manière à se relier d'une manière tangente à la paroi de fond ainsi qu'à la paroi ou qu'aux parois verticale(s).

Ainsi, la courbure de la paroi de liaison est utilisée pleinement, permettant d'éloigner au maximum les parois verticales de la paroi de fond, afin de favoriser la pousse naturelle du pain, en limitant la contrainte des parois verticales.

La cuve est circulaire. Cet aspect permet d'éviter les quatre zones angulaires des cuves parallélépipédiques qui sont des zones de rétention des ingrédients lors de la phase de confection de la pâte, et l'une des sources des difficultés de démoulage du pain.

Par ailleurs, l'association d'une cuve circulaire avec un rayon de courbure important de la paroi de liaison entre la paroi de fond et la paroi verticale permet d'obtenir, lors des différentes phases de pousse du pain, une croissance orientée vers l'intérieur, favorisant l'obtention de pain de type miche avec un effet de paroi peu prononcé.

La présente invention vise également un appareil électroménager comportant un dispositif de préparation et de cuisson tel que décrit précédemment, l'appareil comportant des moyens de chauffage de la cuve de préparation et de cuisson ainsi que des moyens de mise en mouvement de la pale.

L'appareil électroménager peut être une machine à pain, un préparateur culinaire, ou un four. Dans ce cas, le four comporte une enceinte de cuisson accessible par une porte, ainsi que des moyens de blocage du dispositif dans l'enceinte.

D'autres caractéristiques et avantages de l'invention se dégageront de la description qui va suivre en regard des dessins annexés qui ne sont donnés qu'à titre d'exemples non limitatifs, l'invention étant appliquée, dans cet exemple de réalisation, à une machine à pain.
La figure 1 présente l'appareil dans une vue en perspective.
La figure 2 représente une vue identique à celle de la figure 1, l'appareil étant présenté capot ouvert.
La figure 3 est une vue éclatée en perspective de l'appareil.
La figure 4 est une vue en perspective avant de la cuve, objet de la présente invention.
La figure 5 est une vue éclatée, en perspective avant, d'un détail de mise en oeuvre de l'invention.
La figure 6 est un détail de réalisation, dans une vue en perspective arrière.
La figure 7 est un détail de réalisation, dans une vue en perspective avant.
La figure 8 est une vue de dessus de la cuve équipée d'une pale de mélange.
La figure 9 est une vue en coupe selon l'axe A-A de la figure 8.
Les figures 10a et 10b représentent des vues de profil, selon différentes orientations, de la pale dans une première position.
Les figures 11a et 11 b représentent les mêmes vues que celles des figures 10a et 10b, la pale étant dans une seconde position.
La figure 12 représente une vue en perspective avant du support de pale selon l'exemple de mise en oeuvre de l'invention.
La figure 13 est une vue de profil de la cuve, où figurent d'autres éléments de construction.
Les figures 14 et 15 sont des vues d'un élément constructif de l'appareil présenté, respectivement selon une vue en perspective avant et en perspective arrière.
La figure 16 est une vue en perspective avant d'un autre élément constitutif de l'appareil présenté.
La figure 17 est une vue en perspective tronquée montrant l'intérieur de la cuve équipée d'une pale de mélange.
La figure 18 est une vue en coupe selon le plan P de la figure 1 de certaines parties de l'appareil.
La figure 19 est une vue agrandie du détail 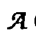 de la figure 18.
La figure 20 montre un détail de réalisation dans une coupe selon l'axe B-B de la figure 8
La figure 21 présente une coupe d'une variante de réalisation de l'invention.
La figure 22 est une vue éclatée, en perspective avant, d'une variante de réalisation d'un sous-ensemble de l'invention.
La figure 23 est une vue analogue à la figure 22, dans une vue assemblée.
La Figure 24 est une vue éclatée, en perspective, d'une autre variante de réalisation du sous-ensemble de pétrissage.

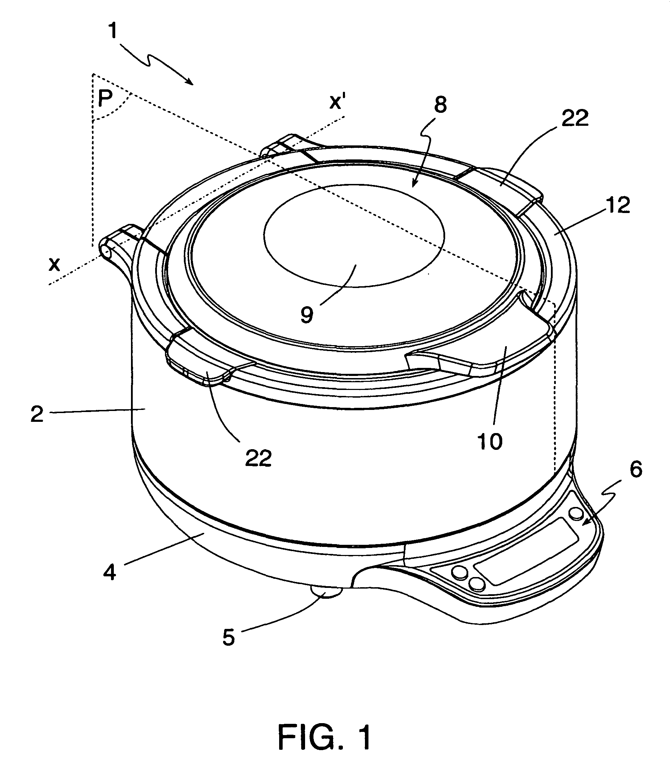

Les figures 1 à 3 présentent une machine à pain 1 dans une architecture peu courante puisque la forme générale de l'appareil est ronde. Cette machine à pain 1 comporte une paroi extérieure 2 reposant sur un socle 4 comportant des pieds 5, le socle étant pourvu d'une interface 6 avec l'utilisateur, cette interface comprenant notamment un écran ainsi que des boutons permettant de paramétrer la machine à pain, tel qu'il est connu par ailleurs.

L'appareil dispose également d'un couvercle 8 articulé selon un axe x-x' à l'arrière de l'appareil, cet axe étant porté et défini par une pièce circulaire 12 constituant une collerette ou bague disposée en l'extrémité supérieure de la paroi extérieure 2.

Le couvercle 8 dispose d'une poignée de préhension 10 facilitant son pivotement autour de l'axe x-x', et comprend une partie centrale 9 transparente, permettant de contrôler l'évolution du cycle de panification.

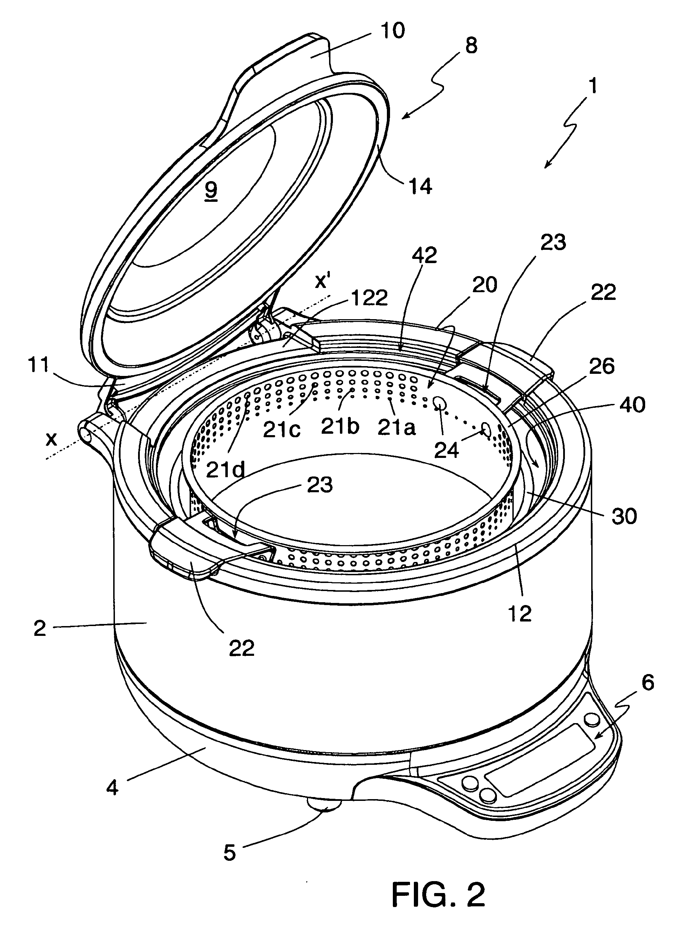

L'ouverture du couvercle, tel que le montre la figure 2, permet d'accéder à une cuve circulaire 20 de préparation et de cuisson, cette cuve étant amovible de l'appareil.

Cette cuve 20 comporte des poignées de préhension 22 s'étendant partiellement hors de l'appareil lorsque le couvercle est fermé, en référence à la figure 1. Ces poignées sont maintenues sur la cuve par tout moyen connu, tel des rivets 24.

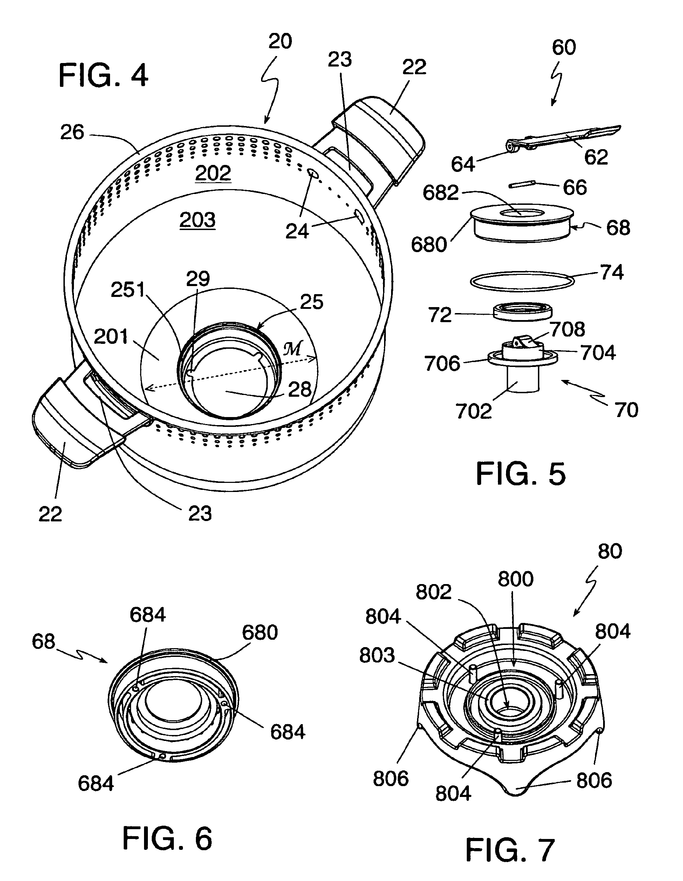

Tel que le montrent les figures 2 et 4, les poignées présentent un évidement 23 afin de limiter la transmission de chaleur vers leurs extrémités, ces dernières étant surmoulées en un plastique de type silicone.

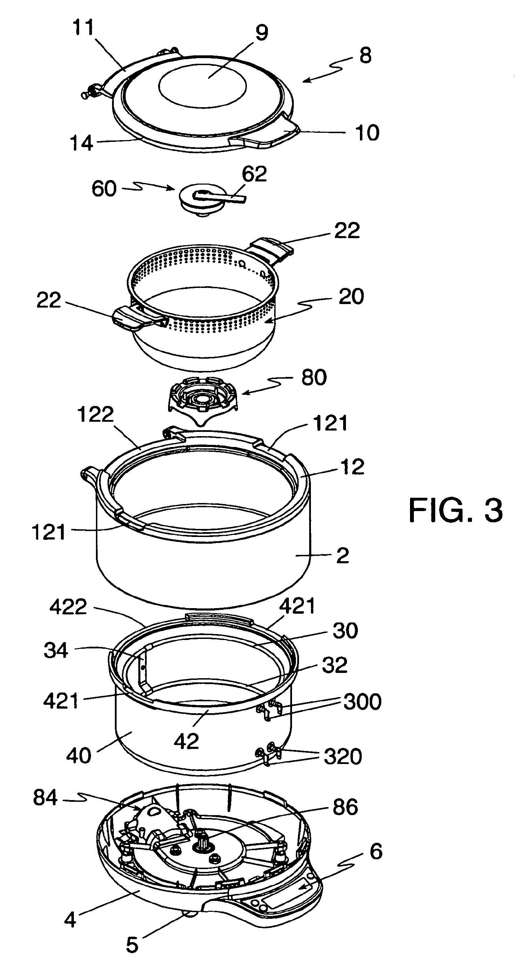

Afin d'intégrer élégamment les poignées à l'appareil, la pièce circulaire 12 comporte des échancrures 121, visibles figure 3, ces échancrures permettant d'accueillir en partie les portions extérieures surmoulées des poignées qui affleurent alors la surface supérieure de cette pièce 12, permettant en quelque sorte de réaliser la continuité de la pièce circulaire 12.

Par ailleurs, ces échancrures, où viennent se positionner les portions extérieures surmoulées des poignées, permettent de maintenir la cuve en évitant la rotation de cette dernière lors du fonctionnement de la pale. Leur positionnement, loin du centre de la cuve, permet d'assurer la stabilité de la cuve lors du pétrissage.

Avantageusement, cette stabilité est améliorée du fait de la largeur de ces échancrures, du coefficient de frottement obtenu par le choix du matériau pour le surmoulage des poignées de cuve, en l'occurrence un silicone, ces parties surmoulées étant disposées dans ces échancrures.

Par ailleurs, la pièce 12 comporte une large échancrure arrière 122, coopérant avec une partie 11 formant saillie issue du couvercle 8, partie qui comporte, par ailleurs, des organes de pivotement autour de l'axe de rotation x-x'. Cette coopération permet notamment de guider le couvercle lors de sa rotation.

De plus, tel qu'il est bien visible figure 1, le couvercle 8 présente une forme bombée, et son diamètre est inférieur au diamètre intérieur de la pièce périphérique circulaire 12. Ainsi, la coopération entre l'échancrure 122 et la saillie 11 permet au couvercle 8, et notamment à son bord périphérique 14, d'être positionné à l'intérieur de l'espace défini par la paroi extérieure 2.

Selon l'une des caractéristiques de la présente invention, la cuve 20 présente une paroi de fond 201 plane, de diamètre 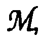 une paroi verticale 202 cylindrique, terminée par un bord supérieur 26, ainsi qu'une paroi de liaison 203 courbe, reliant la paroi de fond à la paroi verticale, tel que présenté à la figure 4 notamment.

De plus, la cuve 20 présente une multitude de perforations 21 a à 21 d, disposées en partie supérieure de la cuve, sous le bord 26, ces ouvertures se présentant sous la forme de trous circulaires.

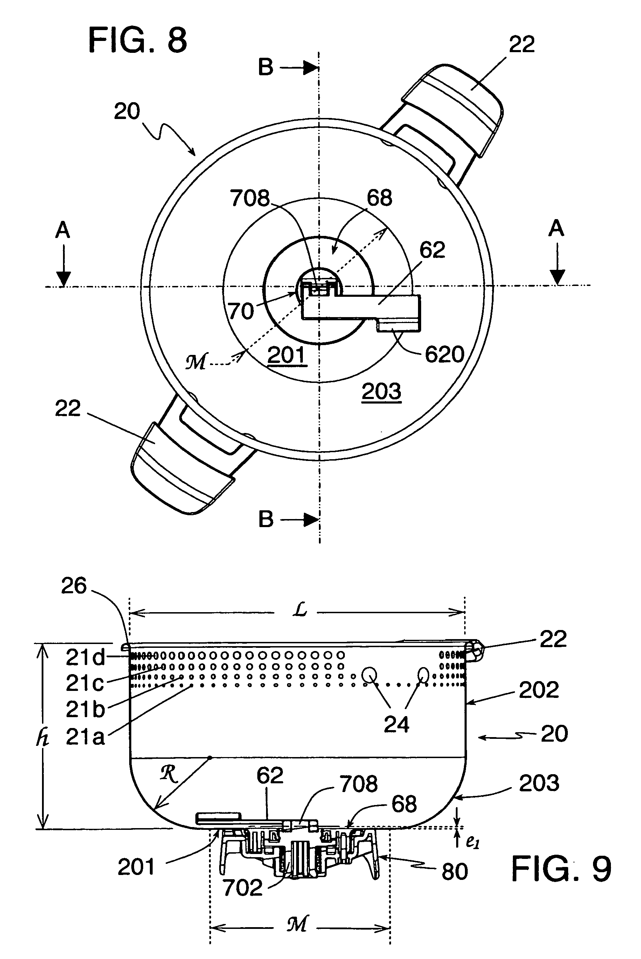

En référence également à la figure 9, ces ouvertures sont alignées verticalement et sont disposées à différentes hauteurs, les ouvertures disposées à même hauteur présentant un même diamètre. De plus, les ouvertures sont de taille croissante en s'approchant du bord supérieur 26.

Ainsi les perforations 21 a présentent un diamètre de l'ordre de 2 mm, les perforations 21 b un diamètre de 3 mm, les perforations 21 c un diamètre de 4 mm, et les perforations 21 d un diamètre de 5 mm. Le rôle de ces ouvertures sera expliqué par la suite.

Afin de ne pas affaiblir la zone de préhension de la cuve, certaines des ouvertures autour des rivets 24 n'ont pas été réalisées.

En référence notamment à la figure 3, la cuve est équipée d'un sous-ensemble de pétrissage 60 disposant d'une pale 62, ce sous-ensemble étant installé dans la cuve, ainsi qu'un moyen de fixation à la cuve de ce sous-ensemble 60, se présentant sous la forme d'une bague 80.

L'appareil comporte également une cuve intermédiaire 40 disposée entre la paroi extérieure 2 et la cuve 20, cette cuve portant un élément chauffant supérieur 30 ainsi qu'un élément chauffant inférieur 32. Ces éléments chauffants sont de type blindés, comportant ainsi une enveloppe métallique à l'intérieur de laquelle est centré, dans un matériau électriquement isolant de type magnésie, un fil résistif. Le passage du courant dans ce fil provoque la montée en température du fil et donc de l'enveloppe métallique. Les éléments chauffants 30, 32 sont maintenus à la cuve intermédiaire 40 par les embouts de connexion, respectivement 300 et 320, ainsi que par une patte 34 maintenant les deux éléments à une distance déterminée, cette patte étant fixée à la cuve intermédiaire 40.

Cette cuve intermédiaire 40 présente, telle la cuve 20, une collerette supérieure 42 comportant des échancrures 421, 422 dont le rôle est identique aux échancrures 121, 122 de la pièce circulaire 12.

Tel que le montre la figure 2, la collerette 42 est disposée à l'intérieur de la pièce circulaire 12. En variante de réalisation, la pièce circulaire 12 et la collerette 42 ne forment qu'une seule pièce.

La cuve intermédiaire 40 est de préférence métallique, et la collerette supérieure 42 est avantageusement réalisée en plastique technique résistant aux températures élevées.

Avantageusement, cette collerette sera réalisée dans un matériau souple, de type silicone, pour permettre :
- d'assurer l'étanchéité de l'intérieur de la cuve intermédiaire 40 vers la paroi extérieure 2 du produit afin d'éviter tout risque de brûlure,
- d'assurer l'étanchéité entre l'intérieur de la cuve intermédiaire 40 et le couvercle 8 pour supprimer les fuites de vapeur, autorisant une ambiance plus confinée lors de la cuisson
- d'absorber les vibrations et réduire les résonances du produit lors du pétrissage. Judicieusement, cette collerette est associée à trois « silentblocs » en silicone placés au niveau des organes de maintien de ladite cuve intermédiaire 40.

De ce fait la pièce circulaire 12 peut être réalisée en un matériau plastique plus courant et donc moins onéreux, tout comme la paroi extérieure 2.

Le socle 4, en référence à la figure 3, comprend un moteur 84 d'entraînement d'un pignon 86 central, ce pignon étant en relation avec la pale, tel qu'il sera expliqué ultérieurement.

Les figures 4 à 9 présentent la cuve 20 ainsi que l'agencement de la pale et de son support dans ladite cuve.

Ainsi, la paroi de fond 201 de la cuve 20 présente un manchon 25 s'étendant verticalement vers l'extérieur, comportant une ouverture centrale 28. Ce manchon permet d'accueillir le sous-ensemble de pétrissage 60. Ce dernier est détaillé figure 5. Il comprend une pale 62 sensiblement horizontale et montée en rotation autour d'un axe 66 horizontal disposé dans un logement 64 de la pale, cet axe étant également porté par une pièce 708 d'un corps 70 de tenue de la pale.

Cet axe de rotation permet à la pale de pouvoir se positionner dans la cuve selon plusieurs orientations.

Par ailleurs, la pale est également montée en rotation autour d'un axe central vertical défini par le corps 70. Ce dernier comprend également une couronne périphérique 706 ainsi que deux portions de cylindre disposées de part et d'autre de cette couronne, une collerette 704 portant la pièce 708, tandis que la portion 702 constitue la base d'entraînement en rotation d'axe vertical de la pale. Un joint souple 72 est disposé autour de la collerette 704, en appui sur la couronne 706.

Le sous-ensemble de pétrissage comporte également une pièce 68 de maintien du corps 70, cette pièce 68 comportant une ouverture centrale 682 ainsi qu'un décrochement périphérique définissant un rebord 680. Le diamètre de la pièce 68 est adapté au diamètre intérieur du manchon 25.

Le joint 72 entourant la collerette 704, le corps 70 est insérée dans la pièce 68, l'ouverture 682 permettant à l'extrémité supérieure de la pièce 708, et notamment à l'axe 66, de dépasser légèrement de la surface supérieure définie par la pièce 68.

Par ailleurs, le manchon 25 dispose d'un léger décrochement 251 près de la paroi de fond 201 de la cuve, permettant à la pièce 68 de venir se positionner sur ce décrochement, via un joint torique 74.

L'étanchéité de la cuve est ainsi assurée par ce joint 74 au niveau de la pièce 68, et par le joint 72 au niveau de la pale.

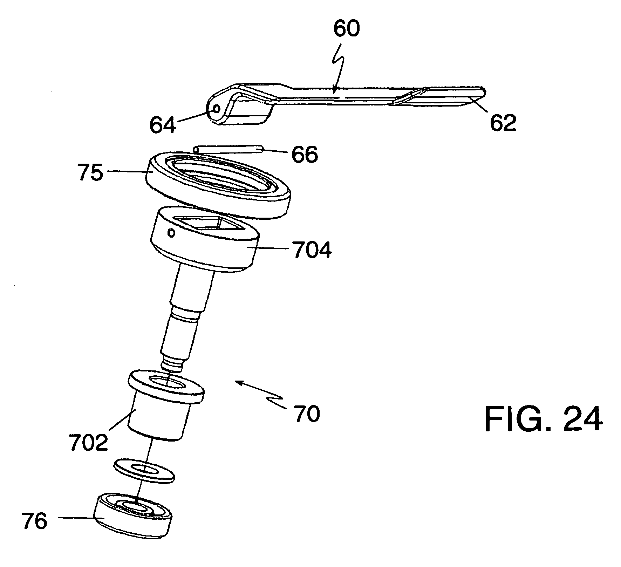

Selon une autre variante de réalisation représentée à la figure 24, les deux joints 74 et 72 sont remplacés par un seul joint souple 75 entourant également la collerette 704. Ce joint 75 assure l'étanchéité entre la cuve et la portion 702 constituant la base d'entraînement en rotation d'axe vertical de la pale. Afin d'assurer également l'étanchéité de cette portion 702 par rapport à l'extérieur de la cuve, un deuxième joint 76 est monté sur la partie inférieure de cette portion, sensiblement au niveau du mécanisme d'entrainement (non représenté). Dans cette variante de réalisation la portion 702 constituant la base d'entraînement en rotation d'axe vertical de la pale est complètement étanche au liquide ce qui permet de pouvoir nettoyer la cuve, y compris dans un lave vaisselle, sans risquer d'endommager cette portion 702.

Le maintien du sous-ensemble 60 sur la cuve 20 est assuré par coopération entre la pièce 68 et la bague 80, la cuve étant prise entre ces deux éléments. Diverses techniques connues peuvent être utilisées, tel le soudage, rivetage,...Selon l'exemple proposé, la bague 80 comporte trois vis 804 disposées sur une couronne 800 et coopérant avec trois échancrures 29 du manchon 25, ces vis venant se maintenir dans trois pré-ouvertures correspondantes 684 disposées sur la paroi inférieure de la pièce 68.

La bague 80 comporte une ouverture centrale 802 dans laquelle est disposé un joint 803 faisant office de palier, ce joint recevant la portion 702 du sous-ensemble de pétrissage, portant la pale 62.

La bague 80 comporte également quatre pieds 806 permettant une position stable de la cuve sur un plan de travail, après son retrait de l'appareil.

Les figures 8 et 9 présentent respectivement une vue de dessus et une vue selon la coupe A-A de la cuve une fois le sous-ensemble de pétrissage 60 installé.

Tel qu'il est bien visible sur ces figures, la pièce 68 ferme le fond de la cuve en étant dans la continuité de la paroi de fond 201, de sorte qu'aucun décrochement sensible n'est apparent sur cette paroi de fond.

Selon l'un des aspects importants de l'invention, la paroi de liaison 203 reliant la paroi de fond 201 de la cuve à la paroi verticale 202 est conformée selon un rayon de courbure 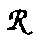 dont la valeur est de l'ordre de 50 mm. De plus, cette paroi de liaison arrive tangentiellement à la paroi de fond ainsi qu'à la paroi verticale.

La hauteur *h* de la cuve est de 130 mm, pour un diamètre 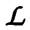 de 230 mm, de sorte que la paroi de liaison s'étend sur environ 40 % de la hauteur de la cuve.

Par ailleurs, la pale 62 s'étend radialement légèrement au delà de la paroi de fond 201, tel que le montre la figure 8. Cette figure montre également que la pale possède, en son extrémité libre, un volet supérieur 620.

De plus, l'axe horizontal de rotation de la pale est très légèrement disposé au dessus de la paroi de fond. Ce léger encastrement de la pale permet de disposer cet axe de rotation à une distance *e₁* le séparant de la paroi de fond de l'ordre de 1 mm environ.

Il peut être prévu d'encastrer davantage la pale en présentant un axe de rotation sous le niveau du fond de cuve. Par cet axe de rotation, la pale peut présenter deux positions dans la cuve.

De plus, tel qu'il est bien visible sur les figures 5 et 9, la liaison entre la pale et le pignon central 86 relié au bloc moteur 84 est disposée sous le niveau de la cuve, au contraire de la plupart des machines à pain, ce qui permet de minimiser le volume de la pale au dessus du fond de la cuve et donc de réduire l'empreinte de celle-ci dans le pain.

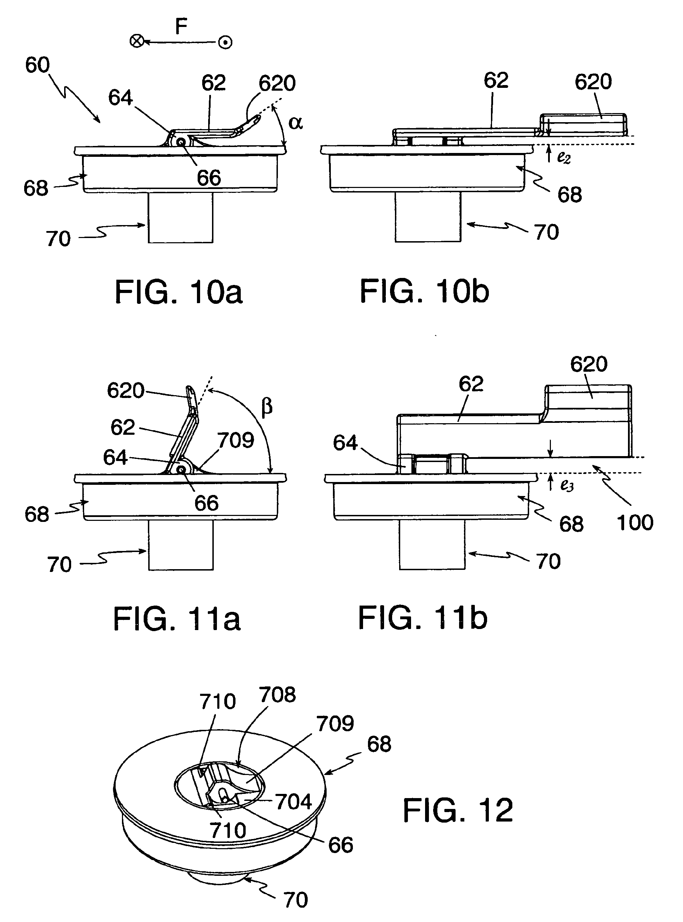

Les figures 10 à 11 présentent le sous-ensemble 60 de pétrissage selon ces deux modes de positionnement de la pale. Les figures 10a et 10b présentent la pale en position rabattue, respectivement en vue de profil et en vue de face. Les figures 11 a et 11 b sont des vues analogues où la pale est en position redressée. Ces figures permettent également de montrer que le volet 620 de la pale 62 présente un angle α avec la partie plane de la pale, angle orienté positivement, et de l'ordre de 35°.

Tel qu'il a déjà été décrit, la pale 62 présente un axe de rotation horizontal, défini par la pièce 66, la pale 62 comportant un logement 64 portant cette pièce 66.

Ainsi, en position rabattue, la pale 62 est disposée à une distance *e₂* de la face supérieure de la pièce 68, qui représente également la paroi de fond 201 de la cuve 20, cette distance *e₂* étant de l'ordre de 2 mm. Dans cette position, le volet 620 est orienté selon l'angle α, la pale étant sensiblement horizontale.

La figure 12 montre que la rotation de la pale s'effectue librement depuis une position rabattue où la pale vient s'appuyer contre une partie inclinée 709 de la pièce 708, jusqu'à une position redressée où le logement 64 de l'axe 66 vient s'appuyer contre des butées 710 l'empêchant de pivoter davantage.

Ainsi, la position redressée correspond à un angle β de la pale 62 avec l'horizontale de l'ordre de 65°. Dans cette position, la pale laisse un espace 100 sous-jacent à ladite pale, la distance e₃ séparant le bord inférieur de la pale et la paroi supérieure de la pièce 68, qui constitue une partie de la paroi de fond 201 de la cuve, est de l'ordre de 5,5 mm.

Par ailleurs, selon un autre aspect complémentaire de l'invention, la pale est fixe dans la cuve 20 de préparation et de cuisson.

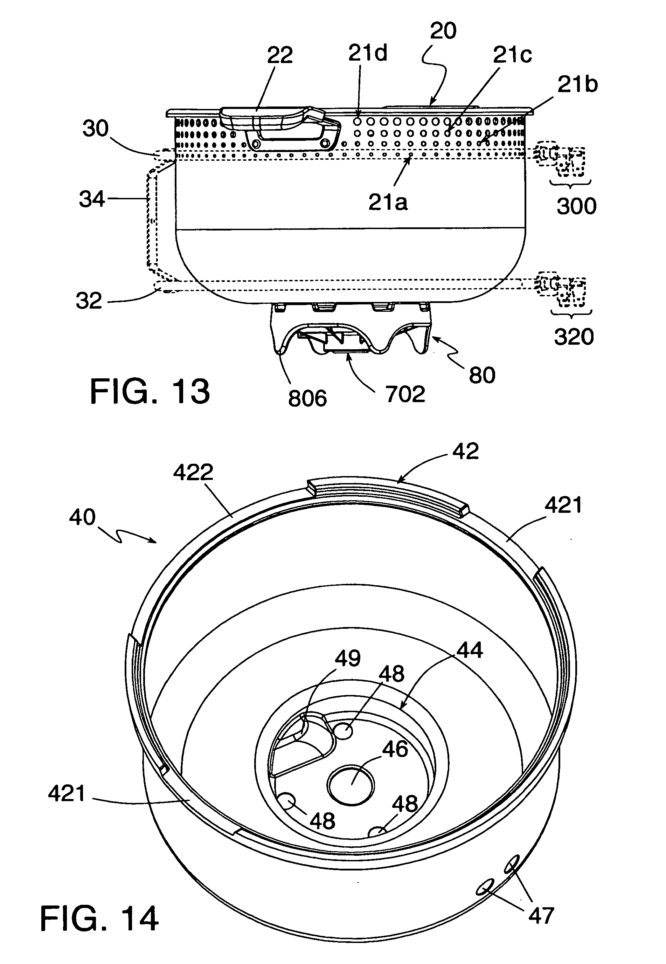

La figure 13 montre un autre aspect de l'invention concernant les perforations 21 a à 21 d de la cuve 20. En effet, cette figure représente la cuve 20 dans une vue de face, où les éléments chauffants 30, 32 ont été figurés en pointillés. Il est ainsi clairement visible que les ouvertures réalisées dans la cuve sont disposées sensiblement au niveau de l'élément chauffant supérieur 30, du moins pour les perforations 21 a les plus éloignées du bord supérieur, afin de permettre une cuisson optimale du pain, tel qu'il sera expliqué ultérieurement. Selon la configuration de l'appareil, cet élément chauffant supérieur peut être légèrement décalé vers les perforations 21 b, voire 21 c.

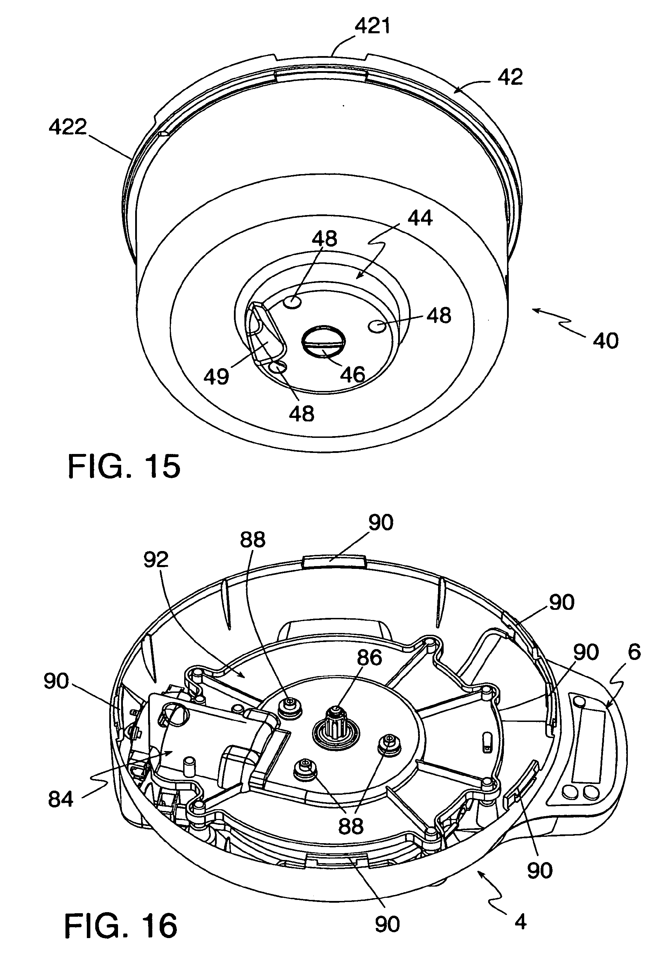

Les figures 14 et 15 présentent respectivement une vue de dessus et une vue de dessous en perspective de la cuve intermédiaire 40, où l'on distingue des ouvertures 47 de passage de l'élément chauffant inférieur 32.

La partie centrale de cette cuve présente un renfoncement 44 similaire, dans sa fonction, au manchon 25 de la cuve 20, et permettant de loger la bague 80 de la cuve, cette dernière étant guidée par les parois dudit renfoncement dont les dimensions sont adaptées à l'encombrement de la bague 80.

Le renfoncement 44 présente également une ouverture centrale 46, trois petites ouvertures 48 réparties de manière équilatérale, ainsi qu'un bossage 49 réalisé vers l'intérieur de la cuve.

La figure 16 présente le socle 4 de l'appareil, qui comporte notamment un bloc moteur 84 ainsi que tous les circuits électriques et électroniques de commande et d'affichage, l'ensemble étant recouvert par un capot de protection 92. En partie centrale du socle sont disposés trois organes de maintien 88 coopérant avec les ouvertures 48 afin de maintenir la cuve intermédiaire par rivetage ou procédé équivalent. Le pignon central 86, relié au bloc moteur, est issu du socle 4 et traverse l'ouverture 46 afin de rentrer en contact avec la portion 702 du sous-ensemble de pétrissage 60 qui comporte des cannelures complémentaires.

Des clips 90, régulièrement répartis sur la périphérie du socle 4, permettent le maintien de la paroi extérieure 2.

En fonctionnement, l'utilisateur dispose les différents ingrédients dans la cuve de préparation 20 qui repose, par la bague 80, sur un plan de travail, cette cuve disposant à demeure de la pale 62, ce qui évite notamment d'oublier de disposer ladite pale dans la cuve lorsque la pale est amovible, tel qu'il est fréquent dans ce type d'appareil.

Dans cette configuration, la pale est rabattue, soit par une disposition initiale dans cette position, soit par l'action des ingrédients lorsque introduits dans la cuve.

L'utilisateur dispose ensuite la cuve dans l'appareil après avoir ouvert le couvercle 8, le renfoncement 44 réceptionnant la bague 80, l'utilisateur faisant en sorte que le surmoulage des poignées entre en correspondance des échancrures ménagées dans la couronne supérieure associée à la cuve intermédiaire.

Par ailleurs, dans cette position, le pignon central 86 pénètre dans la portion 702, tel qu'il est visible sur les figures 9 et 16, et surtout 20, cette pénétration étant réalisée sur une hauteur conséquente, nettement plus importante que dans les machines à pain traditionnelles, permettant, conjointement au maintien de la cuve par les poignées et au guidage de la bague 80 dans le renfoncement 44, de supprimer les éléments de fixation de la cuve comme habituellement réalisés sur les machines à pain, par clipage ou déformation élastique d'une lame ressort, ce qui facilite la mise en place et l'extraction de la cuve de l'appareil.

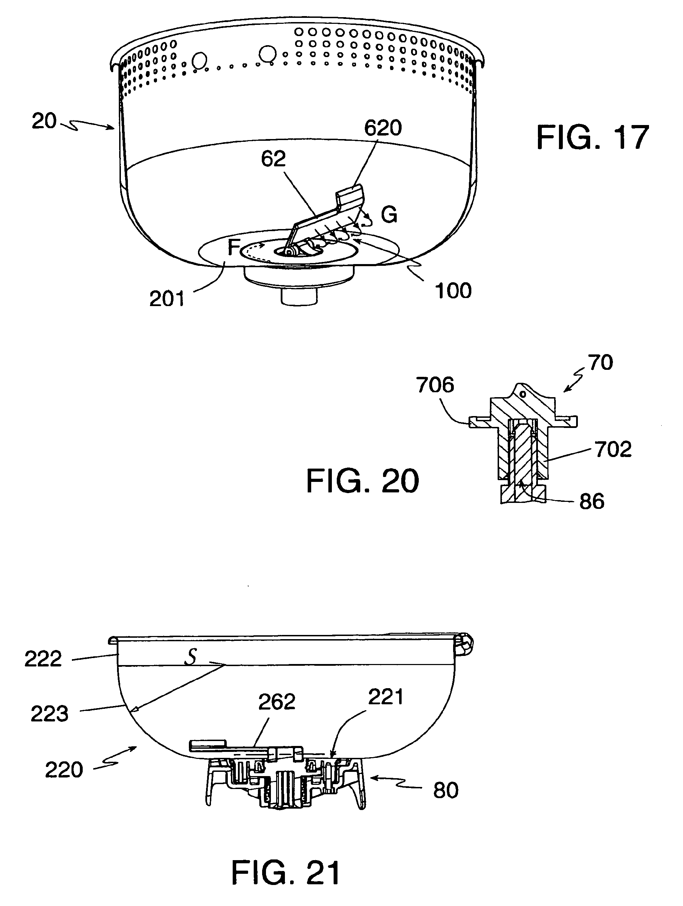

Après avoir validé, par l'interface 6, les différents paramètres de panification, le premier cycle démarre, qui correspond au mélange des différents ingrédients. La pale 62 est alors animée d'un mouvement de rotation selon la direction F, en référence aux figures 10a et 17, la pale étant entraînée en rotation par le pignon 86 central, lui-même mis en rotation par le bloc moteur 84.

La pale étant dans une position rabattue avant le démarrage du cycle, tel qu'illustrée aux figures 10a et 10b, la présence du volet 620 et son inclinaison α par rapport à l'horizontale va permettre, lors du mouvement de la pale 62 contre les ingrédients, de relever ladite pale jusqu'aux butées 710 tel que présenté aux figures 11 a et 11 b.

Dans cette position, la pale est inclinée d'un angle β de l'ordre de 65° par rapport à l'horizontale, cet angle étant donc un angle aigu dans le sens de rotation de la pale. Ainsi, les ingrédients sont rabattus vers le fond de la cuve selon la direction G de la figure 17, et une partie importante des ingrédients passe dans l'espace 100, de sorte que la phase de pétrissage est essentiellement réalisée entre la pale 62 et la paroi de fond de la cuve, à la différence des machines à pain traditionnelles où la phase de pétrissage est réalisée entre la pale et les parois verticales de la cuve.

Ce mouvement vertical de pétrissage est parfaitement visible lors de la rotation de la pale, une fois la pâte formée. Par ailleurs, le rayon de courbure important de la paroi de liaison 203 favorise ce mouvement, en réincorporant plus facilement les ingrédients disposés sur cette zone, l'extrémité de la pale 62 s'étendant légèrement au dessus de la paroi de liaison.

En fin de pétrissage, la pale s'arrête et est rabattue par une légère rotation en sens inverse, la pâte rabattant la pale sensiblement horizontalement.

Par son léger encastrement, la pale ne laisse qu'une fine couche de pâte entre elle et le fond de la cuve. Il est possible de diminuer cette épaisseur de pâte en encastrant davantage la pale, tel qu'il a déjà été précisé par ailleurs.

Les éléments chauffants permettent alors une montée en température de l'enceinte de cuisson pour la cuisson. Les perforations 21 a à 21 d favorisent la circulation de l'air tout en permettant la coloration de la surface du pain par rayonnement, en étant disposées au niveau de l'élément chauffant supérieur 30.

Il est à noter que la forme bombée du couvercle permet, d'une part une bonne circulation de l'air, et d'autre part, constitue un espace supplémentaire de pousse et de cuisson du pain.

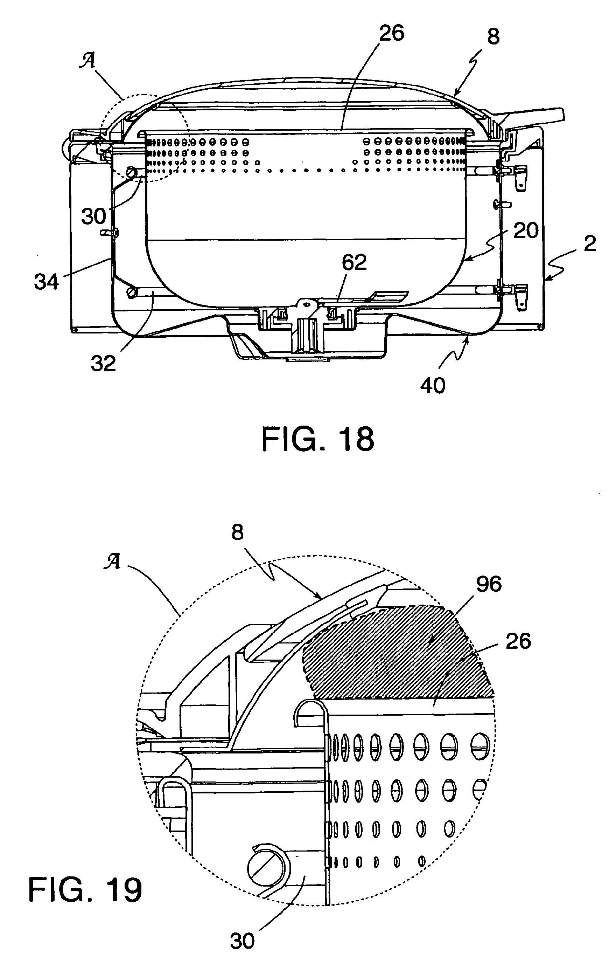

Cet aspect est particulièrement visible sur les figures 18 et 19 qui présentent respectivement une vue en coupe selon le plan P de la figure 1 de l'appareil privé de son socle et un agrandissement du détail A de la figure 18.

Ces figures montrent également que le couvercle se rabat en dessous du bord supérieur 26 de la cuve, ce qui permet notamment d'éviter d'éventuelles projections d'ingrédients dans le cas où la cuve présente une faible hauteur, comme présenté figure 20.

De plus, cette configuration crée également une zone de confinement qui peut être judicieusement utilisée afin de prévenir des phénomènes de débordement lors des phases de pousse et/ou de cuisson de la pâte.

En effet, en cas de débordement, un éventuel surplus de pâte 96 va rapidement venir au contact du couvercle 8, ce qui permet dans un premier temps de contenir cet excès de pâte. Dans un deuxième temps, ce surplus de pâte peut entraîner le soulèvement du couvercle. Il peut alors être prévu un dispositif d'arrêt des éléments chauffants en cas d'ouverture du couvercle, tel celui décrit dans la demande de brevet FR 08 02043. Des dispositifs d'anti-débordement ou de contenance de la pâte en surplus, tels ceux décrit dans les demandes FR 08 02042 et FR 08 02043 peuvent être utilisés en complément de la présente invention.

Avantageusement, ces dispositifs permettent d'arrêter la rotation de la pale lorsque le couvercle est ouvert, ce qui permet de ne pas avoir accès à la pale lorsqu'elle est en mouvement, afin d'éviter tout risque de blessure.

Par la configuration de la cuve, le pain pousse et cuit « librement », c'est-à-dire qu'il est essentiellement formé par sa consistance et les phases de levée. La paroi verticale 202, si elle est essentielle pour garder les ingrédients ensemble, lors de la phase de malaxage, n'est plus utile par la suite, la pâte reposant sur la paroi de fond 201 et une partie de la paroi de liaison 203.

En fin de cuisson, l'alimentation des éléments chauffants est stoppée et l'appareil, par un signal sonore, prévient de la fin de cuisson.

L'utilisateur peut alors sortir la cuve 20 de l'appareil, après avoir ouvert le couvercle 8, par l'intermédiaire des poignées 22 dont une large partie est restée hors de l'appareil, ces parties de poignées restant donc proches de la température ambiante, ce qui évite tout risque de brûlure lors du retrait de la cuve de l'appareil. Cette cuve peut être posée d'une manière stable sur un plan de travail, par l'intermédiaire de la bague 80.

Le retrait du pain de la cuve est réalisé en retournant la cuve, la géométrie de la cuve, et notamment la paroi de liaison au rayon de courbure important favorisant le démoulage du pain. La position rabattue de la pale aide également au démoulage du pain et évite la présence d'une marque profonde dans le pain.

Le pain se présente alors sous la forme de miche proche de la mise en forme que l'on peut trouver en boulangerie, le pain n'étant plus « moulé » par les parois de la cuve.

Il apparaît ainsi que la réalisation de pain rond de type miche, où l'effet de la paroi verticale n'est peu ou pas visible sur le pain, contrairement aux pains de type moulé des machines actuelles, est également liée aux dimensions particulières de la cuve de préparation et de cuisson.

Des expériences menées sur des cuves circulaires de taille différente, il ressort qu'un rapport entre le diamètre 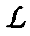 et la hauteur *h* au moins égal à 1 permet de réaliser des pains homogènes avec une croûte bien dorée.

De préférence, le diamètre 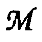 de la paroi de fond 201 est bien inférieur au diamètre 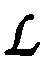 de la cuve mesuré en partie haute de celle-ci, le rapport 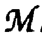 / 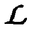 étant inférieur à 0,7, permettant, par l'évasement ainsi réalisé, de démouler facilement le pain après cuisson.

Cet aspect est à rapprocher de l'importance de la courbure de la paroi de liaison 203, tel que décrit précédemment.

Il conviendra toutefois, afin de pouvoir réaliser les quantités de pain usuelles dans ce type d'appareil, de réaliser une cuve dont la paroi de fond présente un diamètre supérieur à 120 mm, un diamètre trop petit entraînant l'étalement de la pâte sur les parois verticales, et une panification qui se rapproche du pain moulé.

Il est en effet apparu que le diamètre de 120 mm est bien adapté à la majorité des pains de 500 g à 1 kg. Pour d'autres poids de pain ou des panifications différentes, les dimensions doivent êtres ajustées de manière à trouver un équilibre entre l'utilité de la paroi verticale pour la phase de mélange, voire de pétrissage et la nécessité que celle-ci n'entre pas en contact avec le pain au moment de la pousse et de la cuisson.

La figure 21 montre une variante de réalisation où la cuve 220 présente une paroi de fond 221, une paroi de liaison 223 très importante, et dont le rayon de courbure S est de l'ordre de 75 mm, la paroi verticale 222 étant de faible hauteur, de l'ordre de 30 mm. Le diamètre de la cuve est de l'ordre de 270 mm. La bague 80 peut être similaire à celle présentée précédemment. La pale peut être légèrement différente, due à la courbure importante de la paroi de liaison. Une pale 262 est ainsi légèrement plus petite que celle présentée précédemment, et légèrement rehaussée, afin de ne pas être trop proche de la paroi de liaison 223. Elle présente toutefois toujours un espace sous-jacent important lorsqu'elle est redressée, tel que précédemment expliqué.

La faible hauteur de la cuve permet d'éviter les ouvertures en partie supérieure de la cuve. Toutefois, afin de limiter les phénomènes de débordement des ingrédients lors de la phase de mélange, il pourra être prévu une rotation plus lente de la pale dans cette phase et/ou une étanchéité du couvercle de l'appareil sur la cuve.

La forme très évasée de la cuve facilitant l'extraction du pain après cuisson permet de garder la pale fixée dans la cuve au moment de l'extraction du pain, cette pale étant avantageusement rétractable sur le fond de la cuve, tel que précédemment expliqué.

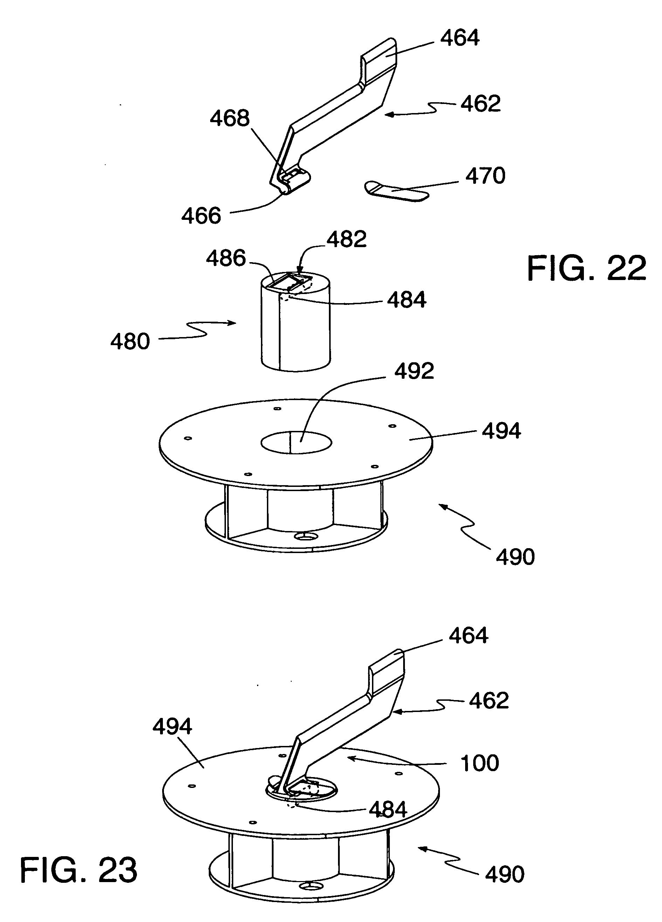

Toutefois, la pale peut être amovible de l'appareil, par exemple en rendant amovible la liaison en rotation horizontale au niveau de l'axe 66, par exemple par une lame ressort. Les figures 22 et 23 montrent un tel exemple, où la pale est par ailleurs davantage encastrée dans la cuve permettant de faciliter le nettoyage de la cuve et de la pale.

Ainsi, une pale 462 présentant un volet 464, dont la géométrie est proche de la pale 62 précédemment décrite, comporte un axe de rotation plein 466 coopérant avec un logement 484 d'une pièce support 480, ce logement étant situé au creux d'une cavité 482 ménagée à la surface de la pièce 480.

La pale possède une lumière 468 légèrement au dessus de l'axe 466, au travers de laquelle coopère une lame ressort 470 venant se positionner dans des échancrures adéquates de la pièce 480, telle l'échancrure 486, afin de maintenir la pale sur la pièce support 480.

Cette pièce support est disposée à demeure dans un logement 492 d'un bloc de maintien 490, présentant une surface supérieure 494 plane, d'architecture sensiblement similaire à celle de la pièce 68, cette face supérieure constituant, en partie, la paroi de fond de la cuve.

A l'instar du sous-ensemble 60, des joints sont judicieusement disposés afin de garantir l'étanchéité de l'ensemble.

La figure 23 montre les différents éléments assemblés. Il est clairement visible que l'axe de rotation de la pale est disposé sous la surface supérieure 494 du bloc 490, qui matérialise le fond de cuve, ce qui permet de rabattre la pale sensiblement sur la surface 494.

Des butées dans la cavité 482 permettent de positionner la pale en position redressée, tel que représentée.

Lorsque l'utilisateur désire retirer la pale, il dégage la lame ressort 470 de son logement et enlève la pale, laissant le fond de cuve relativement plan, excepté la cavité 482.

Cette pale présente également, en position redressée, un espace 100 sous-jacent permettant le passage des ingrédients et le laminage de la pâte.

La présente invention n'est pas limitée à l'exemple de réalisation et à ses modifications exposés, et inclut de nombreuses variantes de mise en oeuvre.

Notamment, l'angle β de la pale, permettant de rabattre la pâte vers le fond de cuve, peut varier entre 40° et 85° pour permettre de laminer la pâte entre la pale et le fond de la cuve.

L'angle α peut également légèrement varier, le principe étant de pouvoir relever la pale lors de sa rencontre avec les ingrédients lors de la mise en rotation en sens inverse de ladite pale.

L'espace 100 permettant le laminage de la pâte doit être suffisant pour permettre ledit laminage, sans être trop important, afin que l'effet de laminage soit efficace. Un espacement entre la pale et la paroi de fond compris entre 5 et 15 mm permet d'obtenir un bon laminage de la pâte.

Par ailleurs, les perforations 21 a à 21 d, présentes sur les cuves nécessitant des parois verticales suffisamment hautes pour éviter la projection d'aliments lors de la phase de mélange des ingrédients, pourraient être remplacées par une grille circulaire rapportée sur la partie supérieure d'une cuve de plus faible hauteur, telle celle présentée à la figure 21.

En complément, il peut avantageusement être introduit un bac d'eau permettant de générer une ambiance de vapeur dans l'appareil, voire un dispositif indépendant de production de vapeur d'eau.

Toutefois, la vapeur est déjà importante dans le mode de réalisation présenté, par l'étanchéité de la cavité de cuisson tel que précédemment indiqué. En effet, la vapeur produite par le pain lui-même sature la cavité de cuisson et améliore la qualité finale de certains pains.

Si l'invention trouve tout son intérêt pour une cuve ronde, la présente invention n'est pas limitée à cette forme particulière de cuve, des formes plus ovales ou elliptiques pouvant être envisagées, comportant des portions de parois planes.

Il pourra alors être prévu plusieurs pales, judicieusement disposées pour permettre un mélange satisfaisant des ingrédients et de la pâte.

Avantageusement, la cuve et/ou la pâle sont recouvertes intérieurement d'un matériau facilitant leur nettoyage, tel le PTFE, qui permet également de faciliter le démoulage du pain.

Par ailleurs, la pale peut, comme sur les machines actuelles, présenter une liaison amovible au niveau de l'axe vertical d'entraînement. Cette configuration facilite le démoulage car la pale est entraînée par le pain au moment du démoulage. Idéalement cette liaison amovible est située sous le niveau de fond de cuve afin de réduire l'empreinte de la pale dans le pain.

Enfin, les éléments chauffants peuvent être de nature différente de celle présentée. Des éléments chauffants de type quartz peuvent également être utilisés. En variante, il est possible d'utiliser des éléments chauffants sérigraphiés déposés sur la paroi extérieure de la cuve.

La présente invention englobe également les réalisations où le dispositif de chauffage est localisé à l'extérieur du logement de cuve, un ventilateur et un conduit de répartition de l'air permettant une circulation d'air chaud au niveau de la cuve.

Bien que l'exemple de réalisation montre une machine à pain, la présente invention n'est pas limitée à ce type d'appareil. Elle peut en effet être appliquée sur des préparateurs culinaires qui présentent un bol à l'intérieur duquel est mis en rotation une pale permettant de mélanger voire pétrir une pâte. Certains préparateurs culinaires proposent des moyens de chauffe du bol de préparation, rejoignant par là certaines des caractéristiques de la machine à pain.

Il est également envisageable d'appliquer la présente invention dans un four électroménager, la cuve étant disposée dans l'enceinte du four, les moyens d'entraînement de la pale pouvant être issus de la sole du four qui pourra également comporter des moyens de maintien de la cuve. Les éléments chauffants pourront être ceux du four.

## Revendications

1. Dispositif de préparation et de cuisson pour un appareil électroménager (1), comprenant une cuve (20, 220) comportant une paroi de fond (201, 221) sensiblement horizontale, ainsi qu'une ou plusieurs parois sensiblement verticales (202, 222) reliées à la périphérie de la paroi de fond (201, 221) par une paroi de liaison (203, 223), ledit dispositif comportant au moins une pale de mélange et de pétrissage d'ingrédients disposée dans le volume de la cuve, **caractérisé en ce que** la cuve est circulaire et cette pale, dans sa position de mélange et de pétrissage, ménage un espace (100) sous-jacent avec la paroi de fond (201, 221) de la cuve (20, 220).

2. Dispositif de préparation et de cuisson selon la revendication précédente, **caractérisé en ce que** la distance (*e₃*) entre la pale (62), dans sa position de pétrissage, et la paroi de fond (201, 221) de la cuve (20, 220), est comprise entre 5 et 15 mm.

3. Dispositif de préparation et de cuisson selon l'une des revendications précédentes, **caractérisé en ce que** la pale est montée en rotation autour d'un axe vertical de la cuve.

4. Dispositif de préparation et de cuisson selon la revendication précédente, **caractérisé en ce que** la pale présente une partie sensiblement plane associée, à l'une des ses extrémités, à un moyen de liaison à la cuve, l'extrémité opposée étant libre, et **en ce que** la partie sensiblement plane, dans la position de mélange et de pétrissage de la pale, présente un angle (β) par rapport à la paroi de fond (201, 221) de la cuve (20, 220) inférieur à 90°.

5. Dispositif de préparation et de cuisson selon la revendication précédente, **caractérisé en ce que** l'angle (β) de la partie sensiblement plane de la pale en position de mélange et de pétrissage, par rapport à la paroi de fond (201, 221) de la cuve (20, 220), est compris entre 40° et 85°.

6. Dispositif de préparation et de cuisson selon l'une des revendications précédentes, **caractérisé en ce que** la pale comporte un axe horizontal de rotation afin de se positionner dans la cuve selon plusieurs orientations.

7. Dispositif de préparation et de cuisson selon la revendication précédente, **caractérisé en ce que** l'extrémité libre de la pale possède un volet supérieur (620) présentant un angle (α) avec la partie plane, cet angle étant orienté positivement.

8. Dispositif de préparation et de cuisson selon l'une des revendications précédentes, **caractérisé en ce que** la pale s'étend radialement légèrement au-delà de la paroi de fond (201, 221) de la cuve (20, 220).

9. Dispositif de préparation et de cuisson selon l'une des revendications précédentes, **caractérisé en ce que** la paroi de liaison (203, 223) de la cuve (20, 220) présente au moins un rayon de courbure ( 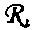 , 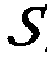 ) supérieur à 30 mm.

10. Dispositif de préparation et de cuisson selon l'une des revendications précédentes, **caractérisé en ce que** la pale est inamovible de la cuve.

11. Dispositif de préparation et de cuisson selon l'une des revendications précédentes, **caractérisé en ce que** la paroi de liaison (203, 223) de la cuve est sensiblement tangente à la paroi de fond (201, 221) ainsi qu'à la paroi (qu'aux) paroi(s)) verticale(s) (202, 222).

12. Appareil électroménager (1) comportant un dispositif de préparation et de cuisson selon l'une des revendications précédentes, **caractérisé en ce que** l'appareil (1) comporte des moyens de chauffage de la cuve de préparation et de cuisson ainsi que des moyens de mise en mouvement de la pale.

13. Appareil électroménager (1) selon la revendication précédente, **caractérisé en ce que** cet appareil est une machine à pain.

14. Appareil électroménager selon la revendication 13, **caractérisé en ce que** cet appareil est préparateur culinaire.

15. Appareil électroménager selon la revendication 12, **caractérisé en ce que** cet appareil est un four comportant une enceinte de cuisson accessible par une porte, le four comportant des moyens de blocage du dispositif dans l'enceinte.

## Claims

1. A device for preparing and cooking for an electric household appliance (1), comprising a vessel (20, 220) containing a substantially horizontal bottom wall (201, 221), and one or more substantially vertical walls (202, 222) connected to the periphery of the bottom wall (201, 221) via a connecting wall (203, 223), said device containing at least one paddle for mixing and kneading ingredients placed in the volume of the vessel, **characterised in that** the vessel is circular and this paddle, in its mixing and kneading position, leaves an underlying space (100) with respect to the bottom wall (201, 221) of the vessel (20, 220).

2. A device for preparing and cooking according to the preceding claim, **characterised in that** the distance (e₃) between the paddle (62), in its kneading position, and the bottom wall (201, 221) of the vessel (20, 220), is between 5 and 15 mm.

3. A device for preparing and cooking according to one of the preceding claims, **characterised in that** the paddle is mounted in rotation around the vertical axis of the vessel.

4. A device for preparing and cooking according to the preceding claim, **characterised in that** the paddle has a substantially planar portion associated, at one of its ends, with a means for connecting with the vessel, the opposite end being free, and **in that** the substantially planar portion, in the mixing and kneading position of the paddle, has an angle (β) lower than 90° with respect to the bottom wall (201, 221) of the vessel (20, 220).

5. A device for preparing and cooking according to the preceding claim, **characterised in that** the angle (β) of the substantially planar portion of the paddle in its mixing and kneading position, with respect to the bottom wall (201, 221) of the vessel (20, 220), is between 40° and 85°.

6. A device for preparing and cooking according to one of the preceding claims, **characterised in that** the paddle has a horizontal axis of rotation so as to position itself in the vessel in several orientations.

7. A device for preparing and cooking according to the preceding claim, **characterised in that** the free end of the paddle has an upper flap (620) making an angle (α) with the planar portion, this angle being positively oriented.

8. A device for preparing and cooking according to one of the preceding claims, **characterised in that** the paddle extends slightly radially beyond the bottom wall (201, 221) of the vessel (20, 220).

9. A device for preparing and cooking according to one of the preceding claims, **characterised in that** the connecting wall (203, 223) of the vessel (20, 220) has at least one radius of curvature ( 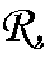 , 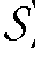 ) greater than 30 mm.

10. A device for preparing and cooking according to one of the preceding claims, **characterised in that** the paddle cannot be removed from the vessel.

11. A device for preparing and cooking according to one of the preceding claims, **characterised in that** the connecting wall (203, 223) of the vessel is substantially tangential to the bottom wall (201, 221) and to the vertical wall(s) (202, 222).

12. An electric household appliance (1) comprising a device for preparing and cooking according to one of the preceding claims, **characterised in that** the appliance (1) contains means for heating the preparing and cooking vessel as well as means for rotating the paddle.

13. An electric household appliance (1) according to the preceding claim, **characterised in that** this appliance is a bread maker.

14. An electric household appliance according to claim 13, **characterised in that** this appliance is a food preparation appliance.

15. An electric household appliance according to claim 12, **characterised in that** this appliance is an oven comprising a cooking chamber accessible through a door, the oven containing means for blocking the device inside the chamber.

## Patentansprüche

1. Vorrichtung zum Zubereiten und Garen für ein Elektrohaushaltsgerät (1), umfassend einen Behälter (20, 220) mit einer im Wesentlichen horizontalen Bodenwand (201, 221) sowie einer oder mehreren im Wesentlichen vertikalen Wänden (202, 222), die mit dem Rand der Bodenwand (201, 221) über eine Verbindungswand (203, 223) verbunden sind, wobei die Vorrichtung wenigstens einen Haken zum Verrühren und Kneten von Zutaten umfasst, die im Behälterraum angeordnet sind, **dadurch gekennzeichnet, dass** der Behälter kreisrund ist und dieser Haken in seiner Rühr- und Knetposition einen darunterliegenden Freiraum (100) zur Bodenwand (201, 221) des Behälters (20, 220) hin ausbildet.

2. Vorrichtung zum Zubereiten und Garen nach dem vorhergehenden Anspruch, **dadurch gekennzeichnet, dass** der Abstand (*e*₃) zwischen dem Haken (62) in seiner Knetposition und der Bodenwand (201, 221) des Behälters (20, 220) zwischen 5 und 15 mm beträgt.

3. Vorrichtung zum Zubereiten und Garen nach einem der vorhergehenden Ansprüche, **dadurch gekennzeichnet, dass** der Haken um eine vertikale Achse des Behälters drehend angebracht ist.

4. Vorrichtung zum Zubereiten und Garen nach dem vorhergehenden Anspruch, **dadurch gekennzeichnet, dass** der Haken einen im Wesentlichen ebenen Teil aufweist, der an einem seiner Enden mit einem Behälterkopplungsmittel verbunden ist, wobei das gegenüberliegende Ende frei ist, und dadurch, dass der im Wesentlichen ebene Teil in der Rühr- und Knetposition des Hakens einen Winkel (β) in Bezug auf die Bodenwand (201, 221) des Behälters (20, 220) aufweist, der kleiner als 90° ist.

5. Vorrichtung zum Zubereiten und Garen nach dem vorhergehenden Anspruch, **dadurch gekennzeichnet, dass** der Winkel (β) des im Wesentlichen ebenen Teils des Hakens in Rühr- und Knetposition in Bezug auf die Bodenwand (201, 221) des Behälters (20, 220) zwischen 40° und 85° beträgt.

6. Vorrichtung zum Zubereiten und Garen nach einem der vorhergehenden Ansprüche, **dadurch gekennzeichnet, dass** der Haken eine horizontale Rotationsachse umfasst, um sich im Behälter nach mehreren Ausrichtungen zu positionieren.

7. Vorrichtung zum Zubereiten und Garen nach dem vorhergehenden Anspruch, **dadurch gekennzeichnet, dass** das freie Ende des Hakens einen oberen Flügel (620) aufweist, der einen Winkel (α) mit dem ebenen Teil bildet, wobei dieser Winkel positiv ausgerichtet ist.

8. Vorrichtung zum Zubereiten und Garen nach einem der vorhergehenden Ansprüche, **dadurch gekennzeichnet, dass** sich der Haken radial etwas über der Bodenwand (201, 221) des Behälters (20, 220) erstreckt.

9. Vorrichtung zum Zubereiten und Garen nach einem der vorhergehenden Ansprüche, **dadurch gekennzeichnet, dass** die Verbindungswand (203, 223) des Behälters (20, 220) wenigstens einen Krümmungsradius ( 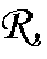 , 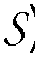 ) von mehr als 30 mm aufweist.

10. Vorrichtung zum Zubereiten und Garen nach einem der vorhergehenden Ansprüche, **dadurch gekennzeichnet, dass** der Haken nicht vom Behälter abgenommen werden kann.

11. Vorrichtung zum Zubereiten und Garen nach einem der vorhergehenden Ansprüche, **dadurch gekennzeichnet, dass** die Verbindungswand (203, 223) des Behälters die Bodenwand (201, 221) sowie die vertikale/n Wand/Wände (202, 222) im Wesentlichen berührt.

12. Elektrohaushaltsgerät (1), umfassend eine Vorrichtung zum Zubereiten und Garen nach einem der vorhergehenden Ansprüche, **dadurch gekennzeichnet, dass** das Gerät (1) Mittel zum Aufheizen des Behälters zum Zubereiten und Garen sowie Mittel umfasst, um den Haken in Bewegung zu setzen.

13. Elektrohaushaltsgerät (1) nach dem vorhergehenden Anspruch, **dadurch gekennzeichnet, dass** das Gerät eine Brotbackmaschine ist.

14. Elektrohaushaltsgerät nach Anspruch 13, **dadurch gekennzeichnet, dass** das Gerät ein Kochgerät ist.

15. Elektrohaushaltsgerät nach Anspruch 12, **dadurch gekennzeichnet, dass** das Gerät ein Backofen ist, der einen Garraum umfasst, der über eine Tür zugänglich ist, wobei der Backofen Mittel zum Arretieren der Vorrichtung im Garraum umfasst.
